(19) Europäisches Patentamt
European Patent Office
Office européen des brevets

(11) **EP 2 827 479 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(51) Int Cl.:
*H02K 7/108* (2006.01)  *B60K 6/387* (2007.10)
*H02K 1/30* (2006.01)  *H02K 7/00* (2006.01)
*H02K 7/08* (2006.01)

(21) Anmeldenummer: **14173569.6**

(22) Anmeldetag: **24.06.2014**

(54) **Gezogene rotorintegrierte Trennkupplung für Hybridsysteme mit innenliegender Betätigung**

Pulled rotor-integrated separating coupling for hybrid systems with internal actuation

Accouplement à débranchement à rotor intégré tracté pour systèmes hybrides à actionnement interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2013 DE 102013213992**

(43) Veröffentlichungstag der Anmeldung:
**21.01.2015 Patentblatt 2015/04**

(73) Patentinhaber: **Schaeffler Technologies AG & Co. KG**
**91074 Herzogenaurach (DE)**

(72) Erfinder: **Nachtmann, Florian**
**67100 Straßburg (FR)**

(56) Entgegenhaltungen:
DE-A1- 3 243 513  DE-A1- 3 243 514
DE-A1- 3 320 950  DE-A1-102011 087 334

EP 2 827 479 B1

## Beschreibung

Die Erfindung betrifft eine rotorintegrierte Trennkupplung für ein Hybridmodul eines Kraftfahrzeugs, etwa einem Pkw oder einem NFZ, wobei ein Rotor vorhanden ist, radial innerhalb dessen eine Kupplungsscheibe axial zwischen einer Anpressplatte und einer Gegendruckplatte angeordnet ist, wobei eine Hebelfeder nach Art einer Tellerfeder radial innerhalb des Rotors angeordnet ist und über ein optionales Übertragungsorgan, wie einen Anpressnocken, kraftübertragend an einem Kontaktort mit der Anpressplatte in Wirkzusammenhang steht, wobei sich die Tellerfeder an einem Lagerbereich eines rotorfesten Bauteils abstützt und radial innerhalb davon eine Betätigungseinrichtung kraftübertragend auf eine Zunge der Tellerfeder einwirkt, so dass eine Verlagerung oder Verkippung der Tellerfeder erzwingbar ist und eine axiale Verlagerung der Anpressplatte bewirkt.

Aus dem Stand der Technik sind bereits Hybridmodule für Triebstrangausbildungen von Fahrzeugen bekannt. So offenbart bspw. die den Oberbegriff des Anspruchs 1 bildende DE.10 2011 087 334 A1 ein Hybridmodul für einen Triebstrang eines Fahrzeuges mit einem Verbrennungsmotor und einem Getriebe, wobei das Hybridmodul zwischen dem Verbrennungsmotor und dem Getriebe wirksam ist und einen elektrischen Antrieb, eine Trennkupplung und einen Freilauf aufweist, und wobei die Trennkupplung und der Freilauf parallel zueinander jeweils zur Drehmomentübertragung von dem Verbrennungsmotor in Richtung des Getriebes vorgesehen sind, der Freilauf von dem Verbrennungsmotor kommendes Drehmoment in Richtung des Getriebes überträgt und bei entgegengesetzt gerichtetem Drehmoment öffnet, und ein vom Freilauf übertragener Anteil am vom Verbrennungsmotor erzeugten Drehmoment durch Einstellung eines von der Trennkupplung übertragbaren Drehmomentes einstellbar ist, so dass das Fahrzeug wahlweise durch den Verbrennungsmotor oder den elektrischen Antrieb oder kombiniert gleichzeitig durch beide antreibbar ist. Unter einem Verbrennungsmotor wird hier eine Verbrennungskraftmaschine verstanden.

Durch die Integration einer Kupplung in den Rotor einer Elektromaschine wird üblicherweise ein kompaktes Hybridmodul ermöglicht. Der aktuelle Stand der Entwicklung bei rotorintegrierten Kupplungen ist eine gedrückte Kupplung mit kraftgesteuerter Verschleißnachstellung (SAC).

Allerdings ist bei bestehenden Lösungen nur ein geringes Kraftrandvolumen festzustellen, da der innere Bereich der Trennkupplung durch den elektrischen Zentralausrücker eingenommen wird und nicht der Tellerfeder zur Verfügung steht. Der Ausrückdurchmesser liegt in etwa in der Mitte eines Rohres. Der Rotor wird an dem Rohr befestigt. Dabei wird unter einem Kraftrandvolumen das durch den radial äußeren Bereich der Tellerfeder definierte Volumen verstanden, also das Volumen des Bereiches der kraftübertragend wirkt, und zwar auf eine Lagerstelle und/oder mittelbar oder unmittelbar, etwa über einen Anpressnocken, auf eine Anpressplatte. Die Rohrmitte ist der radial innerste Bereich innerhalb des Rotors, da üblicherweise am Rotor das besagte Rohr angebracht wird bzw. vice versa, an welchem dann die weiteren Bestandteile der Trennkupplung zumindest teilweise befestigt oder montiert sind.

Auch ist bisher leider eine niedrige Übersetzung bei gedrückten Kupplungsanordnungen zu beklagen, genauso wie ein geringer Blattfederteilkreis, aufgrund von außen liegenden Nocken und der darunter liegenden Blattfedern, also der radial innerhalb davon angeordneten Blattfedern.

Es kann ferner bisher keine weitere Reduktion des Rotorinnendurchmessers, insbesondere bei Integration einer SAC-Nachstellung, realisiert werden.

Bezüglich weiteren Standes der Technik wird auf die DE 32 43 513 A1, die DE 32 43 514 A1 und die DE 33 20 950 A1 verwiesen.

Jedoch sollen aber gerade bei einer Weiterentwicklung die notwendigen Mindestabstände eingehalten werden und die Nachteile aus dem Stand der Technik vermieden werden. Es ist insbesondere die Aufgabe einer erfindungsgemäßen rotorintegrierten Trennkupplung, Drehmoment von einer Verbrennungskraftmaschine zu einem Getriebe zu übertragen und/oder die Verbrennungskraftmaschine mit einem Elektromotor des Hybridmoduls zu starten. Desweiteren soll die Trennkupplung die Verbrennungskraftmaschine vollständig vom Antriebsstrang / Triebstrang abkoppeln, um eine Rekuperation und/oder ein elektrisches Fahren zu ermöglichen.

Bei einer Wahl eines üblichen Rutschsicherheitsfaktors soll eine Trennkupplung ermöglicht werden, die das zwei- bis wenigstens zweieinhalbfache des bisher üblichen Drehmoments übertragen kann. Insbesondere sollen Drehmomentwerte von 300 Nm, 400 Nm und mehr übertragbar sein, ohne dass zwingend auf eine Zweischeiben-Kupplung zurückgegriffen werden muss und/oder ein Freilauf eingesetzt werden muss. Trotz kleinerer Rohrdurchmesser als bislang üblich soll ein und/oder deutlich höheres Drehmoment (zwei- bis zweieinhalbfache) übertragen werden. Hohe Drehmomente bei kleinem Rotorinnendurchmesser sollen somit übertragbar sein. Der beschränkte radiale Bauraum soll optimal genutzt werden, um hohe Anpresskräfte zu erzeugen, selbst bei Einsatz einer einzigen Kupplungsscheibe.

Es ist darüber hinaus das Ziel, den axialen und radialen Bauraumbedarf der Trennkupplung zu minimieren.

Diese Aufgabe wird erfindungsgemäß mit den in Anspruch 1 angegebenen Maßnahmen gelöst.

Vorteilhafte Ausführungsformen sind in den Unteransprüchen beansprucht und werden nachfolgend näher erläutert.

So ist es von Vorteil, wenn der Lagerbereich in einem endnahen, radial äußeren Bereich der Tellerfeder angeordnet ist und die Zunge an einem radial inneren Lochbereich angeordnet ist. Die gesamte radiale Erstreckung der als Hebelfeder agierenden Tellerfeder lässt sich dann so nutzen, dass ein möglichst großes Hebelverhältnis erreicht ist.

Es ist auch von Vorteil, wenn ein Lagerbereich als Ring ausgebildet ist und mit einem wenigstens abschnittsweise umlaufenden Flansch in Anlage befindlich ist. Der Flansch kann kraft-, stoff- und/oder formschlüssig mit dem rotorfesten Rohr oder dem Rotor verbunden sein.

Wenn radial zwischen dem Kontaktort und der Zunge ein Tellerfederzentrierbolzen auf die Tellerfeder einwirkt, so wird eine radiale Verlagerung der Tellerfeder vermieden und dadurch bedingter Verschleiß ausgeschlossen. Die Langlebigkeit der Trennkupplung wird somit verbessert.

Für hohe Drehmomentübergänge ist es von Vorteil, wenn die Trennkupplung als "normally closed"-Kupplung ausgestaltet ist und durch Zug an der Zunge oder einer Vielzahl von Zungen in eine gelüftete / ausgerückte / geöffnete Stellung verbringbar ist oder verbracht ist. Bei Aktivierung der Betätigungseinrichtung in axialer Richtung von der Kupplungsscheibe weg, wird die Kupplungsscheibe aus Klemmung zwischen der Anpressplatte und der Gegendruckplatte gelöst / entfernt und die Kupplung geöffnet / gelüftet.

Besonders zweckmäßig ist es, wenn eine Ausrückhülse mit einer optionalen Kuppe von der der Anpressplatte zugewandten axialen Seite der Zunge aus an der Tellerfeder angreift. Insbesondere ist es dabei von Vorteil, wenn die axiale Seite der Zunge durch die Kuppe oder die Ausrückhülse direkt kontaktiert wird. Die Krafteinleitung ist dann besonders einfach und effizient möglich.

Für die Kräfteverhältnisse ist es von Vorteil, wenn der Kontaktort in einem mittleren radialen Drittel der Tellerfeder angeordnet ist. Insbesondere ist es von Vorteil, wenn der Kontaktort in der Mitte vom radial inneren Ende einer Zunge aus gesehen bis zum radial äußeren Ende der Tellerfeder angeordnet ist. Ein Verhältnis nach Art

$$i_{Kd\_gezogen} = \frac{d_{aK} - d_{aus}}{d_{aK} - d_{iK}} = \frac{d_{AK} - d_{iK} + d_{iK} - d_{aus}}{d_{aK} - d_{iK}} = 1 + i_{Kd\_gedrückt}$$

Es ist von Vorteil, wenn ein Zentrallager eine radial äußere Erstreckung aufweist. Die radiale äußere Erstreckung des Zentrallagers sollte so gewählt werden, das die Montage der Bauteile nach Art einer Ausrückhülse und nach Art eines Sicherungsringes möglich ist Das Rohr, an dem ein Flansch mit der Anlagefläche für den Lagerbereich der Tellerfeder angebracht ist, kann vorteilhafterweise auf der Außenseite einen recht kleinen Durchmesser aufweisen.

Um eine effiziente Betätigung zu ermöglichen, ist es von Vorteil, wenn die Betätigungseinrichtung als hydraulisch betätigter konzentrischer Nehmerzylinder (CSC) ausgebildet ist.

Es ist von Vorteil, wenn der Nehmerzylinder durch eine innere Öffnung der Hebelfeder hindurch greift, um an einem zentrumsnahen Bereich der Hebelfeder auf sie zugaufbringend anzugreifen.

Die Erfindung betrifft auch einen Antriebsstrang mit einem Hybridmodul, das einen Stator und einen Rotor aufweist, und einer Verbrennungskraftmaschine, wobei radial innerhalb des Rotors eine erfindungsgemäße Trennkupplung angeordnet ist.

Während üblicherweise eine aufgedrückte Kupplung eingesetzt wird, welche eine Hebelfeder nutzt, deren Abstützpunkt gegen das Gehäuse radial innen relativ zu einem Kraftweiterleitungspunkt an der Druckplatte angeordnet ist, wird diese bekannte Anordnung nun invertiert, indem die Kupplung aufgezogen werden soll und ein Abstützpunkt gegen das Gehäuse radial außen relativ zum Kraftweiterleitungspunkt an der Druckplatte angeordnet ist. Als Aktor ist ein hydraulisches CSC vorgeschlagen, der über eine Hülse durch die innere Öffnung der Hebelfeder hindurchgreifen kann, um dann an den Tellerfederzungen zu ziehen.

Mit anderen Worten wird eine rotorintegrierte Trennkupplung mit einer außen gelagerten und innen betätigten Tellerfeder eingesetzt. Eine gezogene Kupplungsbetätigung wird dabei favorisiert.

Die Lagerung der Tellerfeder wird durch einen in einem Rohr verstifteten Flansch bewirkt. Die Lagerung der Tellerfeder ist steif und benötigt nur wenig Bauraum, da der Auflagedurchmesser $d_{aK}$ fast dem Rohrinnendurchmesser entspricht. Es stellt sich ein großer Blattfederteilkreis bei relativ großem radialem Bauraum für die Blattfedern, aufgrund der Anordnung der Blattfedern zwischen den Nocken und dem Rohrinnendurchmesser, ein.

Es ist nur ein kleiner Ausrückdurchmesser durch die innenliegende Betätigung notwendig. Die Betätigung erfolgt durch einen hydraulischen Zentralausrücker, welcher oberhalb / radial außerhalb des Ausrücklagers angeordnet ist. Diese Anordnung stellt der Tellerfeder fast den vollständigen radialen Bauraum zwischen dem Rohrinnendurchmesser und dem Gehäuseaußendurchmesser des Ausrücksystems zur Verfügung. Dies ermöglicht ein großes Kraftrandvolumen. Der Maximale Kraftrandaußendurchmesser entspricht beinahe dem Rohrinnendurchmesser. Gleichzeitig kann der Kraftrandinnendurchmesser aufgrund der radial innenliegenden Tellerfederzentrierung weit nach innen gezogen werden.

Eine große Kupplungsübersetzung aufgrund der günstigen Hebelverhältnisse und der gezogenen Kupplungsbetätigung ist die Folge. Eine Übersetzung von i+1 im Vergleich zu einer gedrückten Kupplung ist die Folge.

Die Montage des Ausrücksystems durch den Zentralflansch wird ferner ermöglicht. Die Fixierung der Ausrückhülse mit einer Kuppe durch einen axialen Sicherungsring auf der Ziehhöhe des Ausrücksystems ist festzustellen. Die Montageschritte erfolgen durch die Aussparung des Zentrallagers im Zentralflansch vor der Montage des Zentrallagers. Als besonderer Vorteil ist auch festzustellen, dass kaum Biegung an der Tellerfeder festzustellen ist, weil der Durchmesser $d_{aK}$ nahe dem Rohrinnendurchmesser ist und kaum Bauraum für die Lagerung der Tellerfeder benötigt wird.

Die Anordnung baut axial recht kurz und ist für kleine Rotorinnendurchmesser geeignet. Die außen liegende Lagerung der Tellerfeder führt in Kombination mit der gezogenen, innen liegenden Betätigung zu einer großen Kupplungsübersetzung bei gleichzeitig großem Kraftrandvolumen. Die Betätigung erfolgt bauraumsparend durch einen hydraulischen Zentralausrücker.

Die Tellerfeder ist durch eine Ausrückhülse mit Kuppe und einem Sicherungsring mit der Ziehhülse des Ausrücksystems verbunden. Durch die Öffnung für das Zentrallager im Zentralflansch ist die Zugänglichkeit für die Montageoperation gewährleistet. Ein kostengünstiges Herstellen von Einscheiben-Trennkupplungen mit hoher Drehmomentenkapazität ist die Folge. Eine erfolgreiche kommerzielle Bedeutung ist zu erwarten.

Die Erfindung wird nachfolgend auch mit Hilfe eines Ausführungsbeispiels näher beschrieben. Es zeigen:

Fig. 1     eine erfindungsgemäße rotorintegrierte Trennkupplung im zusammengebauten Zustand in einem Längsschnitt, wobei die Trennkupplung auch als gezogene Hybridtrennkupplung mit "unten" liegender Betätigung verwendet werden kann, und

Fig. 2     die Trennkupplung aus Fig. 1 im Montagezustand, bei noch nicht eingesetztem Zentrallager,

Die Zeichnungen sind lediglich schematischer Natur und dienen nur dem Verständnis der Erfindung. Die gleichen Elemente sind mit denselben Bezugszeichen versehen.

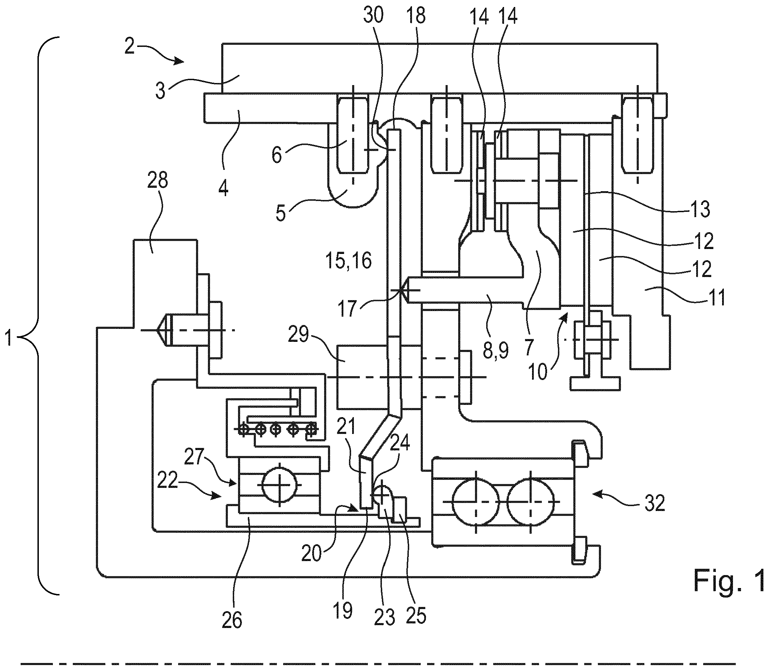

In Fig. 1 ist ein Ausschnitt einer erfindungsgemäßen rotorintegrierten Trennkupplung 1 dargestellt. Die Trennkupplung 1 ist Teil eines Hybridmoduls 2 mit einem nicht dargestellten Stator und einem Rotor 3.

Radial innerhalb des Rotors 3 ist ein Rohr 4 angeordnet und mit dem Rotor 3 drehfest verbunden. Ein Flansch 5 ist am Rohr 4 befestigt, etwa unter Einsatz einer Vielzahl von Stifte 6. Radial innerhalb des Rotors 3 ist eine Anpressplatte 7 mit einem an ihr angebrachten Übertragungsorgan 8, welches nach Art eines Anpressnockens 9 ausgebildet ist, sowie eine Kupplungsscheibe 10 und eine Gegendruckplatte 11 vorhanden. Auf beiden axialen Seiten der Kupplungsscheibe 10 sind Reibbeläge 12 beiderseits eines Trägers 13, bei dem es sich vorteilhaft um ein Belagfedersegment handelt, vorhanden.

Der eine Reibbelag 12 gelangt in Anlage mit der Anpressplatte 7, während der andere Reibbelag 12 in Anlage mit der Gegendruckplatte 11 gelangen kann. Der Anpressnocken 9 wird über Blattfedern 14 in Anlage mit einer als Tellerfeder 15 ausgebildeten Hebelfeder 16 an einem Kontaktort 17 gehalten. Die Tellerfeder 15 weist ein radial äußeres Ende 18 und ein radial inneres Ende 19, an das sich ein Loch 20 anschließt, auf.

Im Bereich des radial inneren Endes 19 der Tellerfeder 15 ist die Tellerfeder 15 mit einer Zunge 21, um genau zu sein mit einer Vielzahl von Zungen 21 versehen. Durch das Loch 20 ragt eine Betätigungseinrichtung 22. Die Betätigungseinrichtung 22 weist eine radial nach außen abstehende Ausrückhülse 23 auf, die eine auf die Zunge 21 ausgerichtete Kuppe 24 aufweist. Die Ausrückhülse 23 mit der Kuppe 24 ist zwischen der Zunge 21 und einem axialen Sicherungsring 25 vorhanden.

Der Sicherungsring 25 ist auf einer Ziehhülse 26 der als Ausrücksystem agierenden Betätigungseinrichtung 22 angebracht, insbesondere formschlüssig auf- /eingesetzt. An der Ziehhülse 26 greift auch ein Ausrücklager 27 an. Die Betätigungseinrichtung 22 ist nach Art eines hydraulischen Ausrückers, insbesondere nach Art eines CSC, also eines hydraulisch betätigten konzentrischen Nehmerzylinders ausgebildet. Dieser CSC ist innerhalb eines Gehäuses 28 vorhanden, wobei das Gehäuse 28 zur Verschraubung im Hybridmodul 2 vorgesehen ist. Ein Tellerfederzentrierbolzen 29 ist zwischen dem Kontaktort 17 und der Zunge 21 vorhanden. Die Tellerfeder 15 ist in einem Lagerbereich 30 in Anlage mit dem Flansch 5 befindlich. Der Lagerbereich 30 ist als Ring (durchgehender Ring oder Teilring) ausbildbar.

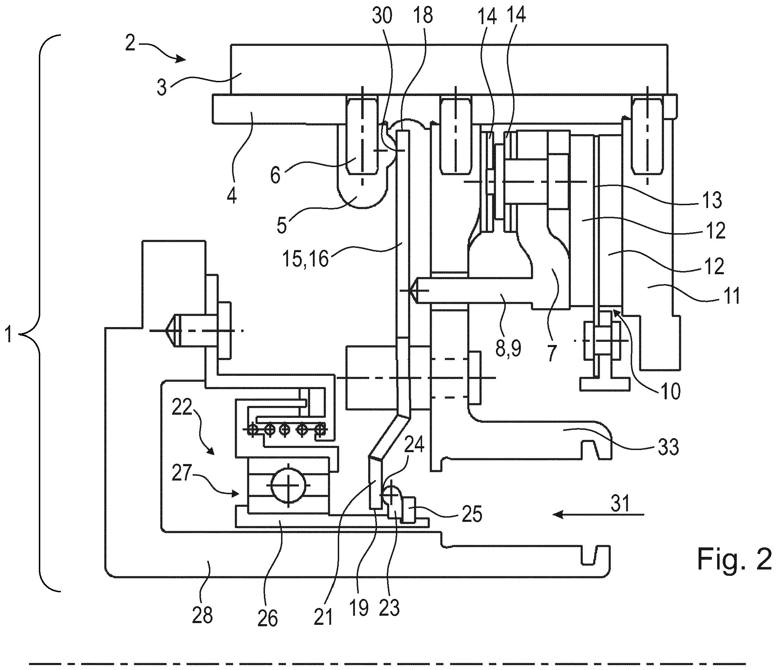

Wie der Fig. 2 gut zu entnehmen ist, ist mit einem Pfeil 31 die Montagerichtung der Ausrückhülse 23, welche die Kuppe 24 aufweist, und des axialen Sicherungsrings 25 visualisiert. Ein Zentrallager 32, wie es in Fig. 1 dargestellt ist, wird dabei zwischen das Gehäuse 28 und einem Zentralflansch 33 eingepresst.

**Bezugszeichenliste**

1     rotorintegrierte Trennkupplung
2     Hybridmodul
3     Rotor
4     Rohr

| 5 | Flansch |
|---|---|
| 6 | Stift |
| 7 | Anpressplatte |
| 8 | Übertragungsorgan |
| 9 | Anpressnocken |
| 10 | Kupplungsscheibe |
| 11 | Gegendruckplatte |
| 12 | Reibbelag |
| 13 | Träger / Belagfedersegment |
| 14 | Blattfeder |
| 15 | Tellerfeder |
| 16 | Hebelfeder |
| 17 | Kontaktort |
| 18 | radial äußeres Ende der Tellerfeder |
| 19 | radial inneres Ende der Tellerfeder |
| 20 | Loch |
| 21 | Zunge |
| 22 | Betätigungseinrichtung |
| 23 | Ausrückhülse |
| 24 | Kuppe |
| 25 | Sicherungsring |
| 26 | Ziehhülse |
| 27 | Ausrücklager |
| 28 | Gehäuse |
| 29 | Tellerfederzentrierbolzen |
| 30 | Lagerbereich |
| 31 | Pfeil |
| 32 | Zentrallager |
| 33 | Zentralflansch |

**Patentansprüche**

1. Rotorintegrierte Trennkupplung (1) für ein Hybridmodul (2), wobei ein Rotor (3) vorhanden ist, radial innerhalb dessen eine Kupplungsscheibe (10) axial zwischen einer Anpressplatte (7) und einer Gegendruckplatte (11) angeordnet ist, wobei eine Hebelfeder (16) nach Art einer Tellerfeder (15) radial innerhalb des Rotors (3) angeordnet ist und über ein Übertragungsorgan (8), wie einen Anpressnocken (9), kraftübertragend an einem Kontaktort (17) mit der Anpressplatte (7) in Wirkzusammenhang steht, wobei sich die Tellerfeder (15) an einem Lagerbereich (30) eines rotorfesten Bauteils abstützt und radial innerhalb davon eine Betätigungseinrichtung (22) kraftübertragend auf eine Zunge (21) der Tellerfeder (15) einwirkt, so dass eine Verlagerung oder Verkippung der Tellerfeder (15) erzwingbar ist und eine axiale Verlagerung der Anpressplatte (7) bewirkt, **dadurch gekennzeichnet, dass** der Kontaktort (17) der Tellerfeder (15) mit dem Übertragungsorgan (8) radial zwischen dem Lagerbereich (30) und der Zunge (21) angeordnet ist und ein Lagern der Tellerfeder (15) durch einen in einem Rohr (4) verstifteten Flansch (5) bewirkt wird.

2. Trennkupplung (1) nach Anspruch 1, **dadurch gekennzeichnet, dass** der Lagerbereich (30) in einem endnahen, radial äußeren Bereich der Tellerfeder (15) angeordnet ist und die Zunge (21) an einem radial inneren, Lochbereich angeordnet ist.

3. Trennkupplung (1) nach Anspruch 1 oder 2, **dadurch gekennzeichnet, dass** der Lagerbereich (30) als Ring ausgebildet ist und mit dem Flansch (5) in Anlage befindlich ist, der ein zumindest abschnittsweise umlaufender Flansch ist.

4. Antriebsstrang mit einem Hybridmodul (2), das einen Stator und einen Rotor (3) aufweist und einer Verbrennungskraftmaschine, **dadurch gekennzeichnet, dass** radial innerhalb des Rotors (3) eine Trennkupplung (1) nach einem der Ansprüche 1 bis 3 angeordnet ist.

**Claims**

1. Rotor-integrated separating clutch (1) for a hybrid module (2), there being a rotor (3), radially within which a clutch disc (10) is arranged axially between a pressure plate (7) and a counterpressure plate (11), a lever spring (16) being arranged radially within the rotor (3) in the manner of a cup spring (15) and being operatively linked to the pressure plate (7) at a contact location (17) in a force-transmitting manner via a transmission member (8), such as a pressing cam (9), the cup spring (15) being supported on a bearing region (30) of a component which is fixed to the rotor, and, radially within it, an actuating device (22) acting in a force-transmitting manner on a tongue (21) of the cup spring (15), with the result that a movement or tilt of the cup spring (15) can be forced and brings about an axial movement of the pressure plate (7), **characterized in that** the contact location (17) of the cup spring (15) with the transmission member (8) is arranged radially between the bearing region (30) and the tongue (21), and mounting of the cup spring (15) is brought about by way of a flange (5) which is pinned in a tube (4).

2. Separating clutch (1) according to Claim 1, **characterized in that** the bearing region (30) is arranged in a radially outer region of the cup spring (15), which region is close to the end, and the tongue (21) is arranged on a radially inner hole region.

3. Separating clutch (1) according to Claim 1 or 2, **characterized in that** the bearing region (30) is configured as a ring and is in contact with the flange (5) which is a flange which is circumferential at least in sections.

4. Drive train having a hybrid module (2) which has a stator and a rotor (3), and having an internal combustion engine, **characterized in that** a separating clutch (1) according to one of Claims 1 to 3 is arranged radially within the rotor (3).

**Revendications**

1. Embrayage de séparation intégré dans le rotor (1) pour un module hybride (2), dans lequel il se trouve un rotor (3), à l'intérieur radialement duquel un disque d'embrayage (10) est disposé axialement entre un plateau de pression (7) et un plateau de contrepression (11), dans lequel un ressort formant levier (16) à la manière d'une rondelle élastique (15) est disposé radialement à l'intérieur du rotor (3) et est en liaison active avec le plateau de pression (7) par l'intermédiaire d'un organe de transmission (8), comme une came de pression (9), en transmission de force à un point de contact (17), dans lequel la rondelle élastique (15) s'appuie sur une zone d'appui (30) d'un composant solidaire du rotor et un dispositif d'actionnement (22) agit radialement à l'intérieur de celui-ci par transmission de force à une languette (21) de la rondelle élastique (15), de telle manière qu'un déplacement ou un basculement de la rondelle élastique (15) puisse être imposé et entraîne un déplacement axial du plateau de pression (7), **caractérisé en ce que** le point de contact (17) de la rondelle élastique (15) avec l'organe de transmission (8) est disposé radialement entre la zone d'appui (30) et la languette (21) et un appui de la rondelle élastique (15) est assuré par une aile (5) goupillée dans un tube (4).

2. Embrayage de séparation (1) selon la revendication 1, **caractérisé en ce que** la zone d'appui (30) est disposée dans une région radialement extérieure, proche de l'extrémité, de la rondelle élastique (15) et la languette (21) est disposée dans une zone perforée radialement intérieure.

3. Embrayage de séparation (1) selon la revendication 1 ou 2, **caractérisé en ce que** la zone d'appui (30) est réalisée en forme d'anneau et se trouve en appui avec l'aile (5), qui est une aile au moins localement périphérique.

4. Chaîne cinématique avec un module hybride (2), qui présente un stator et un rotor (3), et avec un moteur à combustion interne, **caractérisée en ce qu'**un embrayage de séparation (1) selon l'une quelconque des revendications 1 à 3 est disposé radialement à l'intérieur du rotor (3).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011087334 A1
- DE 3243513 A1
- DE 3243514 A1
- DE 3320950 A1